# EUROPEAN PATENT APPLICATION

(11) **EP 4 518 062 A1**
(43) Date of publication of application: **05.03.2025**
(21) Application number: 23195164.1
(22) Date of filing: 04.09.2023
(51) Int. Cl.: H02G 3/06, B60R 16/02, H01R 13/506

(54) **PROTECTION DEVICE AND METHOD FOR ASSEMBLING A PROTECTION DEVICE**

(71) Applicant: ABB SCHWEIZ AG, 5400 Baden (CH)
(72) Inventor: CHAHAL, Harvinder, Coventry Styvechale, CV3 5BA (GB); KNAUS, Michael, Coventry, CV5 7NQ (GB); FRANCOS, Angel, Birmingham, B15 1QS (GB)
(74) Representative: Maiwald GmbH

(57) **Abstract**

Protection device for an interface between a cable (17), in particular for a high voltage cable, and a connector element (15), particularly a high voltage connector, comprising: a first shell element (11), and a second shell element (12), wherein the first shell element (11) and the second shell element (12) are connectable by a clip connection (13), a first axial end area (14), which is configured to be connected to a connector element (15), and a second axial end area (16), which is configured to be connected to a cable (17).

## Description

### FIELD OF THE INVENTION

The present invention relates to a protection device for an interface between a cable, in particular a high voltage cable, and a connector element, in particular a high voltage connector. The present invention further relates to a method for assembling a protection device.

### BACKGROUND OF THE INVENTION

Protection for cables, such as high voltage cables is known. However, such protection often fails to protect other critical points, particularly connector elements such as a high voltage connector and the interface with the connector element.

It has now become apparent, that there is a further need to provide a protection device for protecting connector elements, cables, and the interface between them.

In view of the above, it is an object of the present invention to provide a protection device for protecting connectors and cables and the interface between them. It is further an object of the present invention to provide a method for assembling the protection device.

These and other objects, which become apparent upon reading the following description, are solved by the subject matter of the independent claims. The dependent claims refer to preferred embodiments of the invention.

### SUMMARY OF THE INVENTION

According to a first aspect of the present invention, a protection device for an interface between a cable, in particular a high voltage cable, and a connector element, in particular a high voltage connector, is disclosed, the protection device comprising:
a first shell element, and a second shell element, wherein the first shell element and the second shell element are connectable by a clip connection, a first axial end area, which is configured to be in contact with an connector element, in particular a high voltage connector, and a second axial end area, which is configured to be connected to a cable, in particular a high voltage cable.

The protection device provides protection at the interface between the cable and the connector element. Accordingly, the protection device may also be described as a protection device of the interface or interface section between the cable and the connector element. The protection device, in particular, may protect the connector element, the cable, and the interface between the cable and the connector element.

The protection device consists of two shell elements. The inside of each of the two shell elements is designed to receive the cable and the connector element. More precisely, the first axial end area is configured to be in contact with the connector element and the second axial end area is configured to be in contact with the cable.

Therefore, the protection device may protect the interface or, in other words, the interface section, between the cable and the connector element.

The cable and the connection element may be for use with an electric vehicle. The connection element may, for example, be an electric vehicle connector. The connection element may, for example, be a plug for connecting to a corresponding socket. The plug may be intended to interact with a socket of said electric vehicle.

The cable may be a high voltage cable, also referred to as a high voltage electric cable. The protection device, in particular the second axial end area may be in direct contact with the cable or with a cable protection, for example a braided sleeve or a corrugated sleeve.

As such, the protection device may also be configured to serve as a joint or bridge between the connector device and cable protection.

The first shell element and the second shell element are connectable with a clip connection. The clip connection may also be described as a latching or snap-in connection. The clip connection is preferably tamper free. This means, that the clip connection may not be opened without proper tools. According to the present disclosure, the clip connection may be comprised by the protection device.

The protection device is designed to be arranged on a cable. The protection device may protect the cable from abrasions. It may provide protection against other damages at the connector element, cable, and their interface, for example from pulling or bending. This may reduce the risk of exposing wiring. As an example, repeated use of the cable can cause critical areas of the material to deteriorate and, for example, expose the wiring. Exposed wiring can be a fire hazard or cause injury from electrocution. By using the protection device according to the present invention, the lifespan of the cable and connector element can be expanded.

In an embodiment, the clip connection is operable with an opening means. Preferably, the clip connection may only be opened by an opening means. The opening means may be a tool for opening the clip connection. This feature allows the clip connection to be tamper-free.

In an embodiment, the first axial end area has a larger diameter than the second axial end area. This allows to adapt the protection device to the cable and the connector element.

In an embodiment, the clip connection comprises at least two, preferably four, clip elements. The clip connection preferably comprises multiple clip elements. The multiple clip elements allow a better connection of the two shell elements. This also makes it more difficult for a person to open the protection device without a special tool.

In an embodiment, at least one clip element is arranged in the first axial end area and at least one clip connection is arranged in the second axial end area. The clip connections on the respective axial end areas allow for a good contact with the cable and the connector element.

In an embodiment, the first shell element and the second shell element are connected by a hinge. The hinge is advantageous for a quick and easy handling of the protection device. The hinge preferably extends in a longitudinal direction of the protection device. In other words, the protection device may be folded together to connect the clip connection. The hinge preferably connects the first shell element and the second shell element. The first shell element and the second shell element may each have a symmetrical shape.

In an embodiment, the second axial end area comprises form fitting elements and/or force fitting elements configured to interact with the cable. This allows to relieve the cable of strain or stress, for example when pulled or bent during use.

In an embodiment, the first axial end area comprises form fitting elements and/or force fitting elements configured to interact with the connector element. This allows to relieve the connector element and interface with the cable of strain or stress, for example when pulled or bent.

In an embodiment, the protection device is configured to be arranged on two cables. For example, the protection device may have two separate generally cylindrical sections which are arranged next two each other. Each cylindrical section may be designed to receive a section of a cable and a section of a connector element.

A further aspect of the present disclosure relates to a system comprising at least one protection device according to any one of the embodiments above and a connector element, particularly a high voltage connector, and/or a cable, particularly a high voltage cable. The system may be configured for use with an electric vehicle.

A further aspect of the present disclosure relates to an electric vehicle comprising the system according to any one of the embodiments above.

A further aspect of the present disclosure relates to a method for arranging a protection device on an interface between a cable, particularly a high voltage cable, and a connector element, in particular a high voltage connector, the method comprising: providing a cable, particularly a high voltage cable, and a connector element, particularly a high voltage connector, providing a protection device according to any of the embodiments above, arranging the cable in the first shell element or the second shell element, such that the first axial end area is in contact with the cable and the second axial end area is in contact with the connector element, connecting the respective remaining shell element with the clip element 15, such that the first axial end area 14 form fits and/or force fits with the connector element and the second axial end area 16 form fits and/or force fits with the cable.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principle of the invention. The drawings display:
- **Figure 1**: a perspective view of a schematic drawing of an interface between a cable and a connector element;
- **Figure 2**: a perspective view of a schematic drawing of the interface according to Figure 1 with a cable protection;
- **Figure 3**: a perspective view of a schematic drawing of the interface according to Figure 2 with an embodiment of the protection device;
- **Figure 4**: a perspective view of a schematic drawing of the interface according to Figure 3 with an embodiment of the protection device in an assembled state;
- **Figure 5**: a cut of the interface with the protection device according to Figure 3;
- **Figure 5a**: a close up view of the protection device according to Figure 5;
- **Figure 5b**: another close up view of the protection device according to Figure 5;
- **Figure 6**: a perspective view of a schematic drawing of an interface between a cable and a connector element;
- **Figure 7**: a perspective view of a schematic drawing of the interface according to Figure 6 with another embodiment of a protection device;
- **Figure 8**: a perspective view of a schematic drawing of the interface according to Figure 7 with an interface element;
- **Figure 9**: a perspective view of a schematic drawing of the interface according to Figure 8;
- **Figure 10**: a perspective view of a schematic drawing of the interface according to Figure 9 with a braided sleeve;
- **Figure 11**: a perspective view of a schematic drawing of the interface according to Figure 10 in an assembled state;
- **Figure 12**: a perspective view of a schematic drawing of an interface of two cables with one connector element;
- **Figure 13**: a perspective view of a schematic drawing of the interface according to Figure 12 with a cable protection;
- **Figure 14**: a perspective view of a schematic drawing of the interface according to Figure 2 with another embodiment of a protection device;
- **Figure 15**: a perspective view of a schematic drawing of the interface according to Figure 3 with an embodiment of the protection device in an assembled state; and
- **Figure 16**: a schematic flow diagram of a method.

### DESCRIPTION OF THE EMBODIMENTS

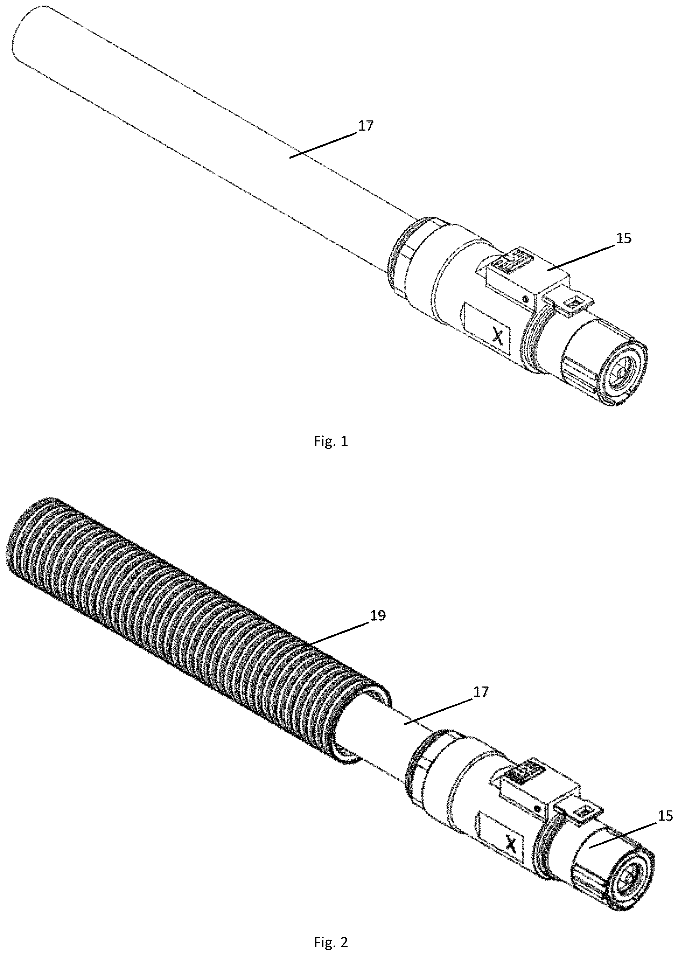

Figures 1 to Figure 4 illustrate different steps of a method for arranging the protection device on the interface between a cable and a connector element. In the following embodiments, the protection device 10 is described, for example, for the interface between a high voltage connector and a high voltage cable. Alternatively, other types of connector elements and cables are possible.

Figures 1 to 5b illustrate a system. The system comprises a cable 17, in particular a high voltage cable 17, and a connector element 15, in particular a high voltage connector. The connector element 15 is arranged on the axial end of the cable 17.

The connector element 15 may, as an example, be configured to be connected to a socket. The system may be configured for use with an electric vehicle.

Figure 2 illustrates a cable protection element 19. The cable protection element 19 in this embodiment is designed as a flexible, corrugated cylindrical body. Other forms may be possible. The cable protection element 19 may also be described as a conduit. The cable protection element 19 encloses the cable 17 in circumferential direction. The cable protection element 19 extends along a longitudinal axis of the cable 17. The cable protection element 19 protects the cable 17 for example from cuts or abrasion.

A gap is located between the cable protection element 19 and the connector element 15. In other words, the cable protection element 19 is not in contact with the connector element 15. It will be understood that, accordingly, the cable protection element cannot protect the interface between cable and connector element.

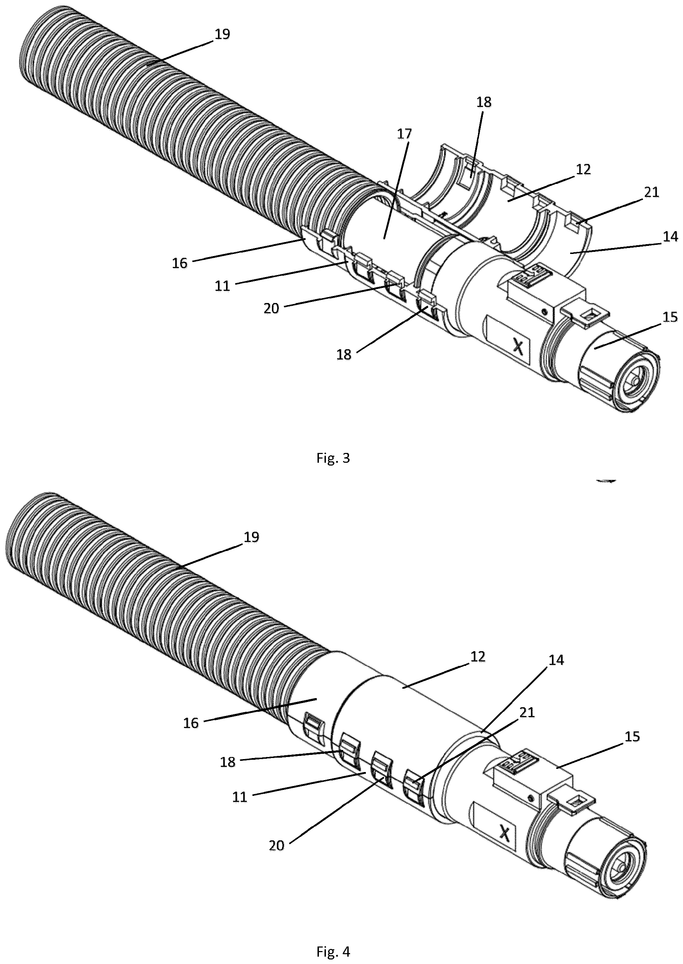

In Figure 3, a protection device is arranged in the area of the gap.

The protection device comprises a first shell element 11, and a second shell element 12. The cable 17 and the connector element 15 are arranged in the first shell element 11 of the protection device 10.

The first shell element 11 and the second shell element 12 are connectable by a clip connection 13. In other words, the protection device may be closed by the clip connection 13.

The first shell element 11 and the second shell element 12 each have a cylindrical geometry. In particular, at the inner surface, which is configured to enclose the cable 17, has a cylindrical geometry. Other forms may be possible. The protection device 10 is configured to house i.e. enclose a part of the cable 17 with the cable protection element 19 and the connector element 15. The cable protection element 19 may be defined as a part of the cable 17.

The protection device 10 further comprises a first axial end area 14, which is configured to be in contact with an connector element 15, for example an electric vehicle connector 15, and a second axial end area 16, which is configured to be connected to the cable 17, preferably the high voltage cable 17. The second axial end area 16 may also be configured to be connected to the cable protection element 19.

Figure 4 illustrates the embodiment according to Figure 3 with the protection device 10 in a closed state. This means, that the first shell element 11 and the second shell element 12 are connected by the clip connection 13.

The clip connection 13 comprises four clip elements 18. Each clip element 18 comprises a tongue element 20 with a latching means. The latching means are formed as protrusion on the tip of the tongue element 20. The latching means extend in a radial direction of the protection device. The tongue element 20 interacts with a corresponding recess 21. The recess 21 is arranged at the second shell element 12. The recess 21 may also be described as a window.

The clip connection 13 is designed to be tamper free. More precisely, the clip connection 13 may only be opened with a special tool. The clip connection 13 i.e. the clip elements 18 are designed such that an opening by hand is impossible or at least nearly impossible. For example, the material and the resulting spring force of the tongue elements 20 may be too great to operate or open by hand without any tool. Also the recesses 21 and the latching means may be designed so that it may be not possible to interact with the latching means on the tongue elements 20. For example, the recess and the latching means may be designed smaller than a fingertip.

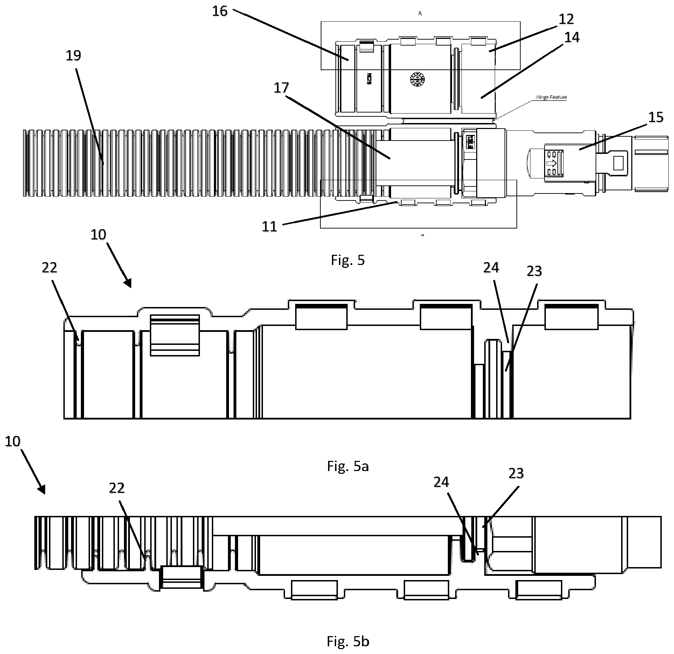

Figure 5, Figure 5a and Figure 5b illustrate a cut of the protection device 10 according to Figure 4. The protection device 10 will be described in more detail with the help of said Figures.

The first axial end area 14 is in contact with the connector element 15. The second axial end area 16 is in contact with the cable 17, more precisely with the cable protection element 19.

The protection device 10 comprises circumferential protrusions 22. The circumferential protrusions 22 are arranged in the second axial end area 16. The circumferential protrusions 22 are configured to interact with the surface of the cable 17. In particular, the circumferential protrusions 22 are preferably configured to form a form fitting with the surface of a corrugated sleeve. The circumferential protrusions 22 are arranged on an inner wall of the protection device 10 and extend radially inwards.

The connector element 15 comprises a circumferential groove 23. The circumferential groove 23 is configured to form a form-fitting with a further circumferential protrusion 24. The further circumferential protrusion 24 is arranged in the first axial end area 14 of the protection device 10. More precisely, the further circumferential protrusion 24 is arranged on an inner wall and extends radially inwards towards the connector element 15 and away from the protection device 10.

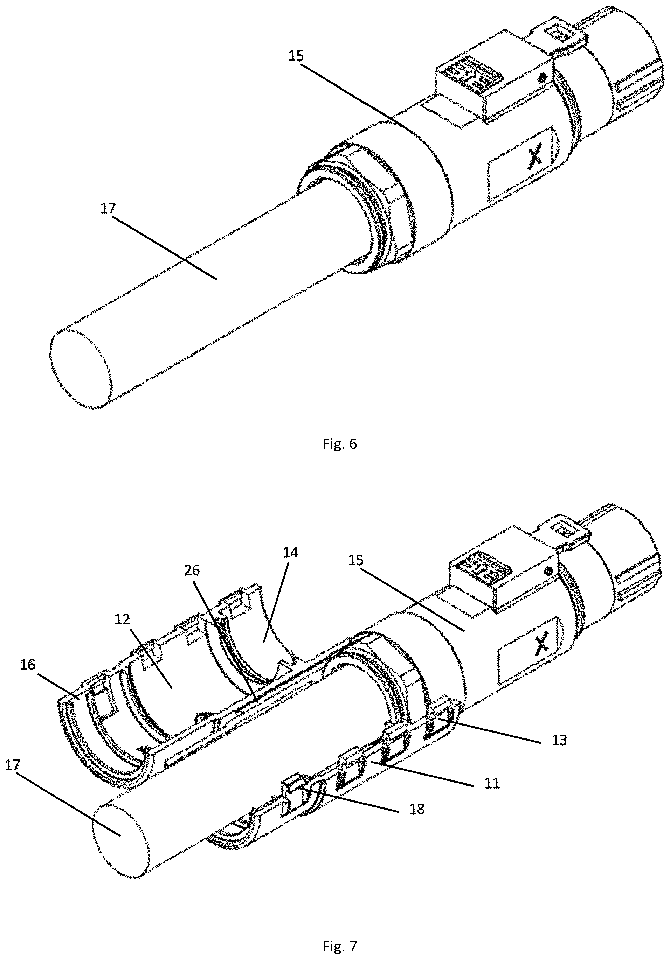

Figures 6 to 11 illustrate steps of arranging a further embodiment of the protection device on a cable 17 and a connector element 15. The protection device 10 shown in Figures 7 to 11 is similar to the protection device 10 described in the embodiment before. The protection device 10 in Figures 7 to 11 is configured to be connected to a cable 17 with a braided sleeve. The braided sleeve is the cable protection element 19 of the cable 17 in this embodiment. To connect the braided sleeve with the protection device 10, an interface element 25 may be used.

The interface element 25 is arranged in the second axial end area 16 of the protection device. The interface element 25 is designed to provide an interface between the braided sleeve of the cable 17 and the protection device 10. The interface element 25 comprises a circumferential slot 27. The circumferential slot is configured to receive a ring stop 28.

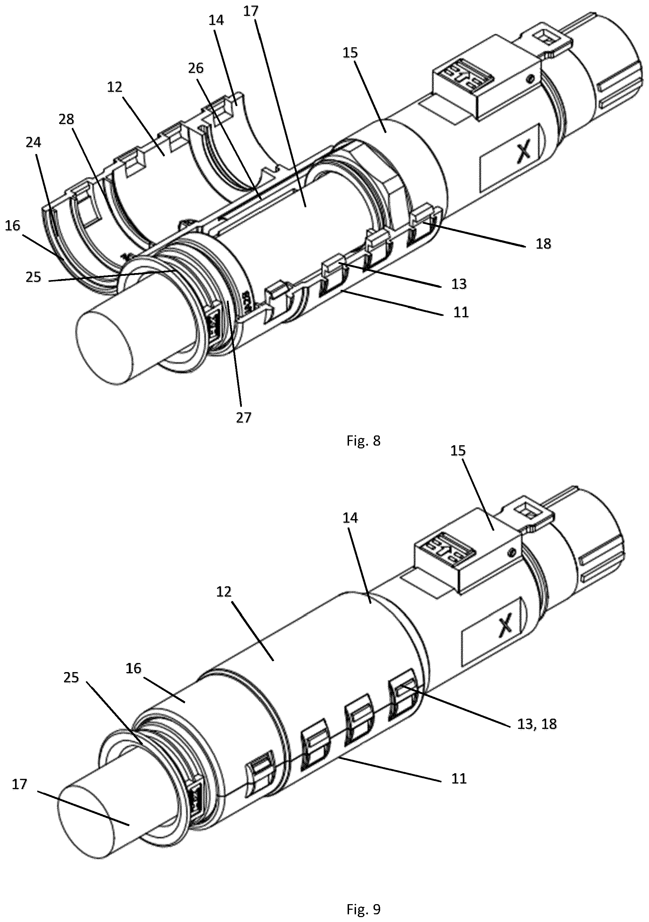

The interface element 25 has a cylindrical shape and encloses the cable 17 in circumferential direction. In Figure 9, the interface element 25 is arranged in the protection element 10. The interface element 25 is fixed in the protection element 10 by the circumferential slot 27 and the ring stop 28.

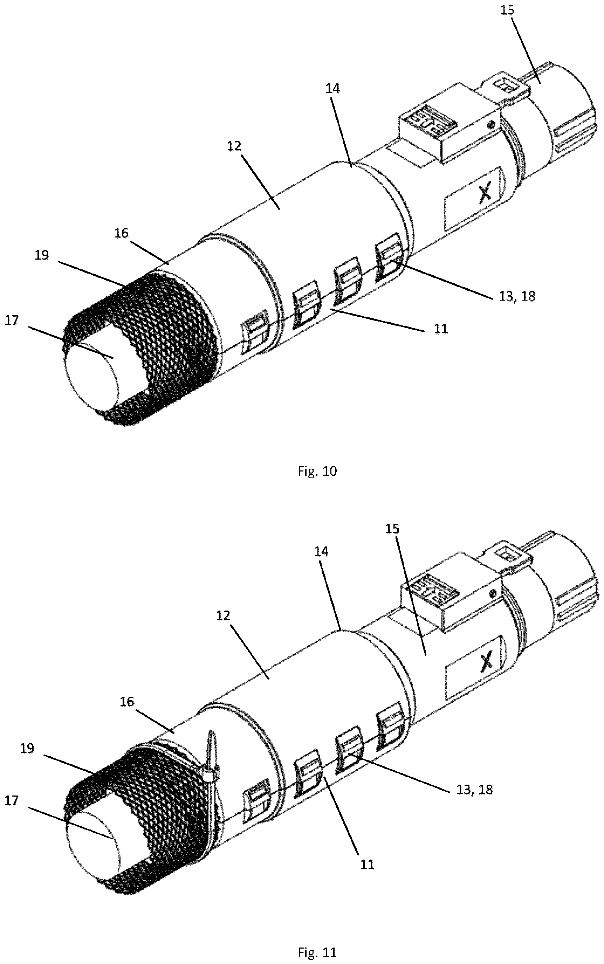

In Figure 10, the braided sleeve is arranged on the interface element 25. In this state, the braided sleeve is loosely arranged on the interface element 25. To tightly fix the braided sleeve to the interface element 25, a cable tie or a clamp may be used, as illustrated in Figure 11. The interface element 25 may comprise a further groove to accommodate the cable tie or clamp and to provide a better grip.

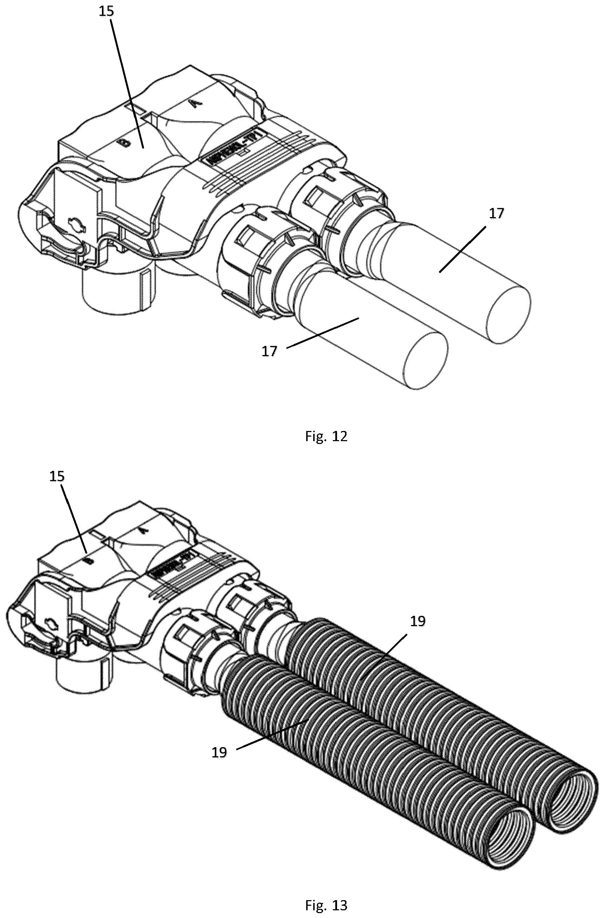

Figure 12 illustrates a two cables 17, which are connected to a connector element 15. More precisely, both cables 17 are connected to the same connector element 15. In Figure 13, a corrugated sleeve or protection element 19 is arranged around each cable 17.

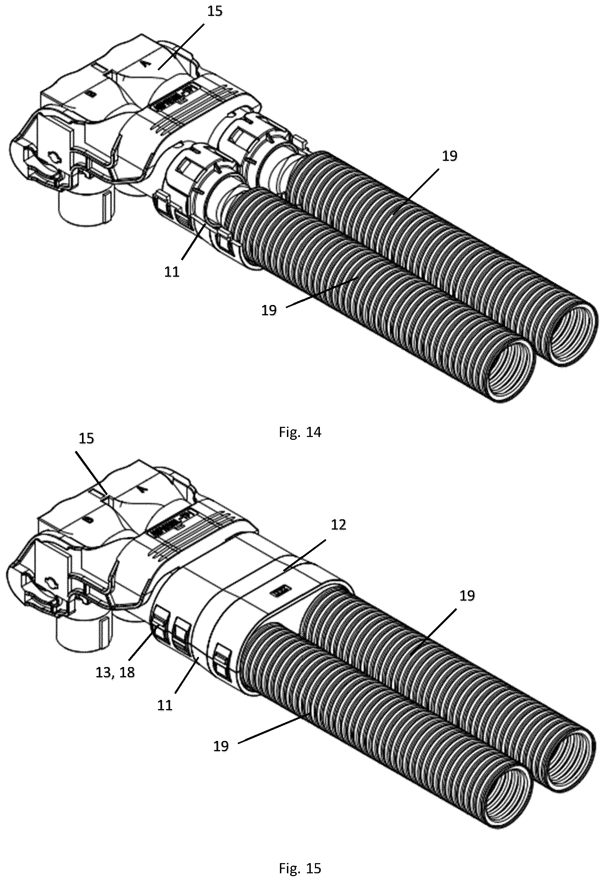

In Figure 14, the first shell element 11 is arranged at the cable 17 and the connector element 15. In Figure 15, the second shell element 12 is connected to the first shell element 11.

The protection device 10 according to Figure 15 is configured to receive two cables 17. The protection device 10 comprises two cylindrical reception areas for the cables17 and the connector element 15. Each reception area may comprise the features of the embodiments described above. The embodiment according to Figure 15 is configured to receive or to be arranged on two cables 17.
he embodiment according to Figure 15 is configured to receive or to be arranged on two cables 17.

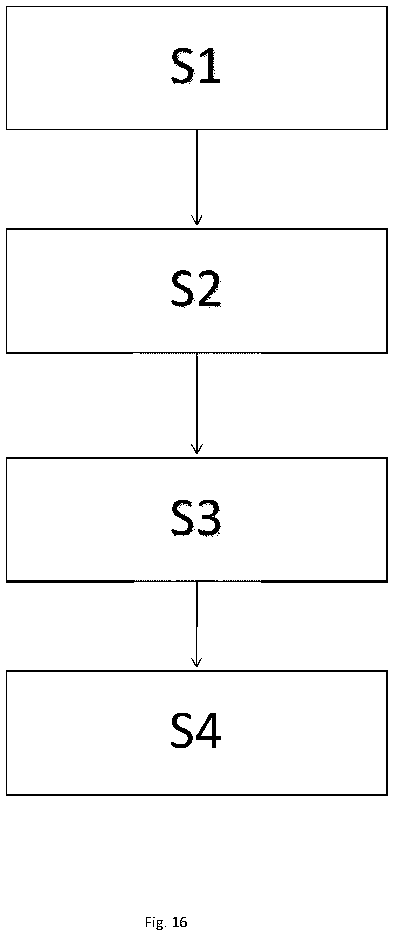

Figure 16 illustrates a method for assembling a protection device to a cable 17.

In a first step S1 a cable, in this example a high voltage cable, 17 and a connector element 15, in this example a high voltage connector, are provided, the cable connected to the connector element.

In a second step S2 a protection device 10 is provided. The protection device may be a protection device according to one of the embodiments described above.

In a third step S3 the high voltage cable is arranged in the first shell element 11 or the second shell element 12, such that the first axial end area 14 is in contact with the high voltage cable and the second axial end area 16 is in contact with the connector element 15.

In a fourth step S4 the respective remaining shell element is connected with the clip element 18, such that the first axial end area 14 forms a form and/or force fitting with the connector element and the second axial end area 16 forms a form fitting and/or force fitting with the cable.

Any disclosure and embodiments described herein relate to the protection device, the system, the electric vehicle, and the method, lined out above or below and vice versa. The benefits provided by any of the embodiments and examples equally apply to all other embodiments and examples and vice versa.

It shall be noted that all embodiments of the present disclosure concerning the method might be carried out with the order of the steps as described, nevertheless this has not to be the only and essential order of the steps of the method. The herein presented methods can be carried out with another order of the disclosed steps without departing from the respective method, unless explicitly mentioned to the contrary hereinafter.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### LIST OF REFERENCES

- 10: protection device
- 11: first shell element
- 12: second shell element
- 13: clip connection
- 14: first axial end area
- 15: connector element
- 16: second axial end area
- 17: cable
- 18: clip elements
- 19: cable protection element
- 20: tongue element
- 21: recess
- 22: circumferential protrusions
- 23: circumferential groove
- 24: further circumferential protrusion
- 25: interface element
- 26: hinge
- 27: circumferential slot
- 28: ring stop

## Claims

1. Protection device for an interface between a cable (17), in particular for a high voltage cable, and a connector element (15), in particular a high voltage connector, comprising:
- a first shell element (11), and a second shell element (12), wherein the first shell element (11) and the second shell element (12) are connectable by a clip connection (13),
- a first axial end area (14), which is configured to be connected to a connector element (15), particularly a high voltage connector, and
- a second axial end area (16), which is configured to be connected to a cable (17), preferably a high voltage cable.

2. Protection device according to claim 1, wherein the clip connection (13) is configured to be operable with a designated opening means.

3. Protection device according to claim 1 or 2, wherein, the first axial end area (14) has a larger diameter than the second axial end area (16).

4. Protection device according to any one of the preceding claims, wherein the clip connection (13) comprises at least two, preferably four, clip elements (18).

5. Protection device according to any one of the preceding claims, wherein, at least one clip element (18) is arranged in the first axial end area (14) and at least one clip element (18) is arranged in the second axial end area (16).

6. Protection device according to any one of the preceding claims, wherein the first shell element (11) and the second shell element (12) are connected by a hinge (26).

7. Protection device according to any one of the preceding claims, wherein the second axial end area (16) comprises form fitting elements and/or force fitting elements configured to interact with the cable (17).

8. Protection device according to any one of the preceding claims, wherein the first axial end area (14) comprises form fitting elements and/or force fitting elements configured to interact with the connector element (15).

9. Protection device according to any one of the preceding claims, wherein the protection device is configured to be arranged on two cables (17).

10. A system, comprising at least one protection device (10) according to any one of the preceding claims and a connector element (15), in particular a high voltage connector, and/or a cable (17), particularly a high voltage cable.

11. An electric vehicle comprising the system according to claim 10.

12. A method for arranging a protection device on an interface between a cable, particularly a high voltage cable, and a connector element (15), particularly a high voltage connector, the method comprising:
- providing a cable (17), particularly a high voltage cable, and a connector element (15), particularly a high voltage connector, the cable connected to the high voltage connector,
- providing a protection device (10) according to any of the claims 1 to 9,
- arranging the cable in the first shell element (11) or the second shell element (12), such that the first axial end area (14) is in contact with cable and the second axial end area (16) is in contact with the connector element (15),
- connecting the respective remaining shell element with the clip element (15), such that the first axial end area (14) form fits and/or force fits with connector element (15) and the second axial end area (16) form fits and/or force fits with the cable (17).
